# EUROPEAN PATENT APPLICATION

(11) **EP 2 190 204 A2**
(43) Date of publication of application: **26.05.2010**
(21) Application number: 09172118.3
(22) Date of filing: 02.10.2009
(51) Int. Cl.: H04N 7/26, H04N 7/167

(54) **Method and system for securely transmitting and receiving multimedia content**

(30) Priority: 21.11.2008 IN CH28962008; 04.06.2009 KR 20090049343
(71) Applicant: SAMSUNG ELECTRONICS CO., LTD., Suwon-si, Gyeonggi-do (KR)
(72) Inventor: Rajaram, Naganur, Gyeonggi-do (KR)
(74) Representative: Boakes, Jason Carrington

(57) **Abstract**

A method and a system for transmitting and receiving multimedia content includes identifying the Intra coded frames (I-frames) from a combination of the 1-frames, predicted frames (P-frames), and bi-directional predicted frames (B-frames). The method comprises scrambling Intra coded frames selectively, generating multimedia content comprising scrambled information of the I-frames, and transmitting the multimedia content. The method further comprises receiving the multimedia content and descrambling the I-frames selectively. The system comprises transmitting unit including a selective scrambler, and a processor including an encoding unit and a decoding unit. The system further comprises a receiving unit including selective a descrambler.

## Description

### BACKGROUND OF THE INVENTION

### 1. Field of the Invention

The present invention relates generally to the field of rendering multimedia, and more particularly, to a method and a system for transmitting and receiving multimedia content.

### 2. Description of the Related Art

In Direct to Home (DTH), Digital Video Broadcasting-Terrestrial (DVB-T) and Digital Video Broadcasting-Handheld (DVB-H) technologies, multimedia content to be rendered includes frames such as Intra coded frames (I-frames), Predicted frames (P-frames) and Bi-directional frames (B-frames). The multiple frames of the multimedia content are scrambled and transmitted to ensure data security in the multimedia content.

The scrambled multimedia data may be played or viewed by a user. The video and the image of the scrambled multimedia data may not be displayed to a malicious user. But, it is required high power consumption to scramble all frames of the multimedia content.

In light of the foregoing, there is a need for an efficient technique for securely transmitting and receiving the multimedia content.

### SUMMARY OF THE INVENTION

Embodiments of the present invention described herein provide a method and a system for securely transmitting and receiving multimedia content.

According to the present invention, a method for transmitting multimedia content includes identifying I-frames from a combination of I-frames, P-frames, and B-frames, generating the multimedia content including scrambled information of the I-frames, transmitting the multimedia content, and receiving the multimedia content and descrambling the I-frames selectively.

According to the present invention, a system for transmitting multimedia content includes a transmitting unit having a selective scrambler for scrambling Intra coded frames selectively, a receiving unit having a descrambling unit for descrambling the Intra coded frames selectively, and a processor having an encoding unit for encoding key information and a decoding unit for decoding the key information.

According to the present invention, since the scrambling and descrambling steps are performed only for I-frames, all bytes of video data do not need to be scrambled, thereby reducing power consumption in a transceiver.

A content provider imposes fees for descrambling I-frames on a mobile TeleVision (TV) user. When only P-frames or P- and B-frames are decoded and reproduced without paying fees, the only viewable images are low-quality ghost images having objects expressed in several rectangular shapes on a screen, making it difficult to identify their original appearances. Since the mobile TV user viewing the ghost images can view complete images by paying fees for descrambling the I-frames, the advertising business is promoted and the inconvenience to the mobile TV user of identifying undesired content immediately after a fee payment is eliminated.

### BRIEF DESCRIPTION OF THE DRAWINGS

The above and other aspects, features and advantages of the present invention will become more apparent from the following detailed description when taken in conjunction with the accompanying drawings in which:
FIG. 1 illustrates a network environment, in accordance with which the embodiments of the present invention can be implemented;
FIG. 2 illustrates an electronic device for receiving multimedia content according to the present invention;
FIG. 3 illustrates a content server for transmitting the multimedia content according to the present invention;
FIG. 4 illustrates a method for transmitting a scrambled multimedia content according to the present invention; and
FIG. 5 illustrates a method for descrambling and displaying a scrambled multimedia content according to the present invention.

Persons skilled in the art will appreciate that elements in the Figures are illustrated for simplicity and clarity and may have not been drawn to scale. For example, the dimensions of some of the elements in the Figures may be exaggerated relative to other elements to help to improve understanding of various embodiments of the present invention.

### DETAILED DESCRIPTION OF THE EMBODIMENTS

The embodiments of the present invention will now be described in detail with reference to the accompanying drawings. In the following description, a detailed description of known functions and configurations incorporated herein has been omitted for clarity and conciseness.

Embodiments of the present invention provide a method and a system for scrambling and descrambling I-frames of a multimedia content. Since only the I-frames are scrambled and descrambled to transmit/receive the multimedia content, power consumption for scrambling and descrambling P- or B-frames is reduced.

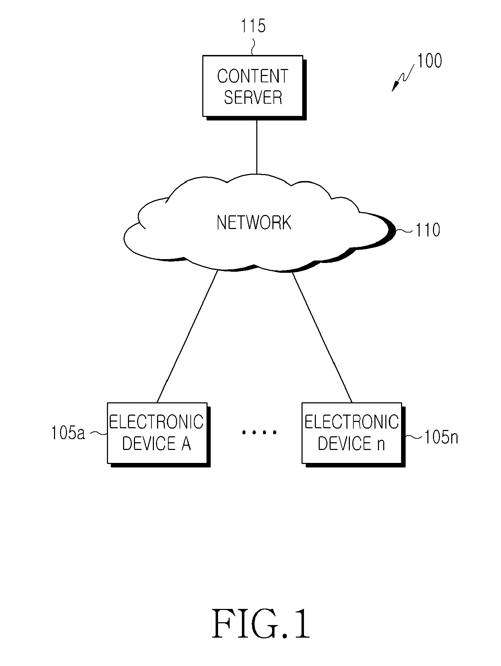

FIG. 1 illustrates a network environment 100, in accordance with which various embodiments of the present invention are implemented. The environment 100 includes a plurality of electronic devices 105a to 105n. Examples of the electronic devices 105a to 105n include, but are not limited to a computer, a laptop, a palmtop, a mobile terminal, and a Personal Digital Assistant (PDA). The electronic device 105a is in communication with a content server 115, through a network 110. Examples of the content server 115 include, but are not limited to the Digital Video Broadcasting-Terrestrial(DVB-T) content server, Digital Video Broadcasting-Handheld(DVB-H) content server and Direct To Home(DTH) content server. The multimedia content may be telecasted through an Internet channel. The network 110 includes, but is not limited to air-interface and wire-interface.

The content server 115 includes one or more elements for ascertaining the identity of the visitors and providing the personalized notifications specific to the visitors. The electronic devices 105a to 105n receive scrambled multimedia data from a content server 115 and descramble the multimedia data.

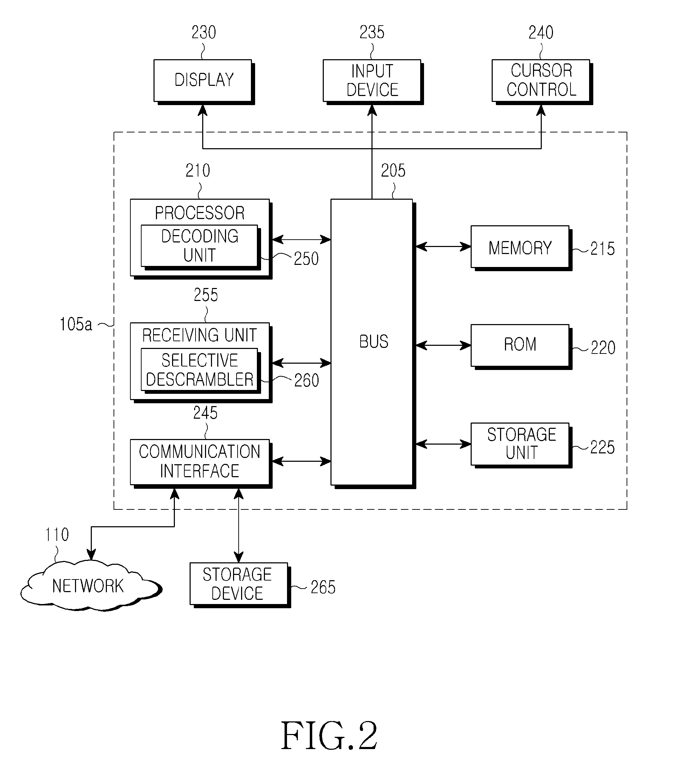

FIG. 2 illustrates the electronic device 105a, in accordance with the present invention. The electronic device 105a includes a bus 205 or other communication mechanism for communicating information, and a processor 210 coupled with the bus 205. The processor 210 can include an integrated electronic circuit for processing and controlling functionalities of the electronic device 105a. The electronic device 105a also includes a memory 215, such as a Random Access Memory (RAM) or other dynamic storage device, coupled to the bus 205 for storing information that can be used by the processor 210. The memory 215 can be used for storing any temporary information. The electronic device 105a further includes a Read Only Memory (ROM) 220 or other static storage device coupled to the bus 205 for storing static information for the processor 210. A storage unit 225, such as a magnetic disk or optical disk, is provided and coupled to the bus 205 for storing information.

The electronic device 105a can be coupled via the bus 205 to a display 230, such as a Cathode Ray Tube (CRT), a Liquid Crystal Display (LCD) or a Light Emitting Diode (LED) display, for displaying information. An input device 235, including alphanumeric and other keys, is coupled to the bus 205 for communicating an input to the processor 210. The input device can be included in the electronic device 105a. Another type of user input device is a cursor control 240, such as a mouse, a trackball, or cursor direction keys for communicating the input to the processor 210 and for controlling cursor movement on the display 230. The input device 235 can also be included in the display 230, such as in the form of a touch screen.

Various embodiments are related to the use of the electronic device 105a for implementing the techniques described herein. In one embodiment, the techniques are performed by the processor 210 using information included in the memory 215. The information can be read into the memory 215 from another machine-readable medium, such as the storage unit 225.

The term "machine-readable medium" as used herein refers to any medium that participates in providing data that causes a machine to operate in a specific fashion. In an embodiment implemented using the electronic device 105a, various machine-readable medium are involved, for example, in providing information to the processor 210. The machine-readable medium can be a storage media, including both non-volatile media and volatile media. Non-volatile media includes, for example, optical or magnetic disks, such as the storage unit 225. Volatile media includes dynamic memory, such as the memory 215. All such media must be tangible to enable the information carried by the media to be detected by a physical mechanism that reads the information into a machine.

Common forms of machine-readable medium include, for example, a floppy disk, a flexible disk, hard disk, magnetic tape or another magnetic medium, a CD-ROM or another optical medium, punchcards, papertape, or another physical medium with patterns of holes, a Random Access Memory (RAM), a Programmable Read Only Memory (PROM), and Electronically Programmable Read Only Memory (EPROM), a FLASH-EPROM, or any other memory chip or cartridge.

The machine-readable medium can also be a transmission media including coaxial cables, copper wire and fiber optics, including the wires that include the bus 205. Transmission media can also take the form of acoustic or light waves, such as those generated during radio-wave and infra-red data communications.

The electronic device 105a also includes a communication interface 245 coupled to the bus 205. The communication interface 245 provides a two-way data communication coupling to the network 110. For example, the communication interface 245 can be a Local Area Network (LAN) card to provide a data communication connection to a compatible LAN. Wireless links can also be implemented. In any such implementation, communication interface 245 sends and receives electrical, electromagnetic or optical signals that carry digital data streams representing various types of information. The communication interface 245 can be a Universal Serial Bus (USB) port.

The electronic device 105a can be connected to the storage device 265 for storing or retrieving information. Examples of the storage device 265 include, but are not limited to, a flash drive, a pen drive, a hard disk or any other storage media.

The processor 210 may include a decoding unit 250 used for decoding key information of I-frames of the multimedia content.

The electronic device 105a may not include the processing units and the functions of the processing units can be performed by the processor 210.

The processor 210 may also be coupled to a receiving unit 255 through the bus 205 or through a communication mechanism for communication information. The receiving unit 255 includes a selective descrambler 260 that descrambles the I-frames of the receiving multimedia content. The selective descrambler 260, implements one of many descrambling techniques to descramble the I-frames of the received multimedia content.

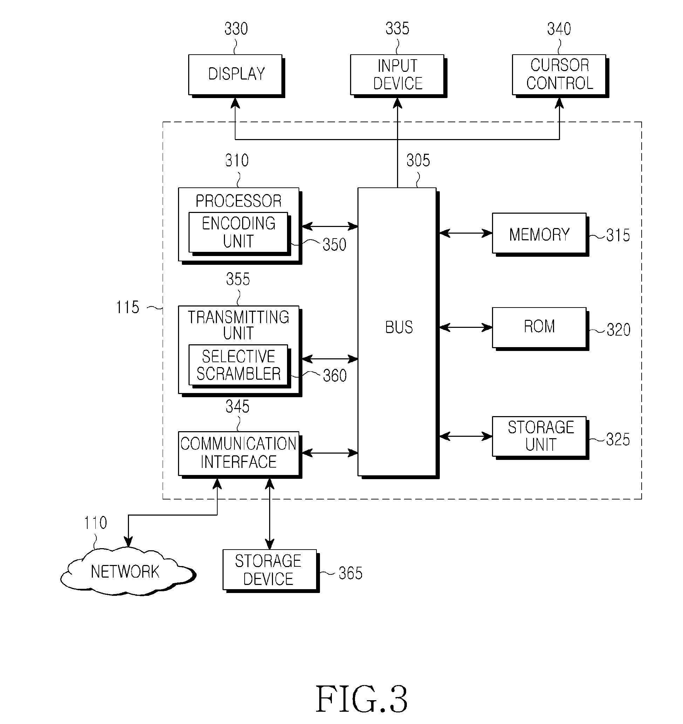

FIG. 3 illustrates a content server 115 in accordance with the present invention. The content server 115 includes a bus 305 or other communication mechanism for communicating information, and a processor 310 coupled with the bus 305. The processor 310 can include an integrated electronic circuit for processing and controlling functionalities of the content server 115. The content server 115 also includes a memory 315, such as a RAM or other dynamic storage device, coupled to the bus 305 for storing information that can be used by the processor 310. The memory 315 can be used for storing any temporary information. The content server 115 further includes a ROM) 320 or other static storage device coupled to the bus 305 for storing static information for the processor 310. A storage unit 325, such as a magnetic disk or optical disk, is provided and coupled to the bus 305 for storing information.

The content server 115 can be coupled via the bus 305 to a display 330, such as a CRT, an LCD or an LED display, for displaying information. An input device 335 including alphanumeric and other keys, is coupled to the bus 305 for communicating an input to the processor 310. The input device can be included in the content server 115. Another type of user input device is a cursor control 340, such as a mouse, a trackball, or cursor direction keys for communicating the input to the processor 310 and for controlling cursor movement on the display 330. The input device 335 can also be included in the display 330, such as in the form of a touch screen.

Various embodiments are related to the use of the content server 115 for implementing the techniques described herein. In one embodiment, the techniques are performed by the processor 310 using information included in the memory 315. The information can be read into the memory 315 from another machine-readable medium, such as the storage unit 325.

The term "machine-readable medium" as used herein refers to any medium that participates in providing data that causes a machine to operate in a specific fashion. In an embodiment implemented using the content server 115, various machine-readable medium are involved, for example, in providing information to the processor 310. The machine-readable medium can be a storage media including both non-volatile media and volatile media. Non-volatile media includes, for example, optical or magnetic disks, such as the storage unit 325. Volatile media includes dynamic memory, such as the memory 315. All such media must be tangible to enable the information carried by the media to be detected by a physical mechanism that reads the information into a machine.

Common forms of machine-readable medium include, for example, a floppy disk, a flexible disk, hard disk, magnetic tape, or another magnetic medium, a CD-ROM or another optical medium, punchcards, papertape, any other physical medium with patterns of holes, a RAM, a PROM, and EPROM, a FLASH-EPROM, or any other memory chip or cartridge.

The machine-readable medium can also be a transmission media including coaxial cables, copper wire and fiber optics, including the wires that include the bus 305. Transmission media can also take the form of acoustic or light waves, such as those generated during radio-wave and infra-red data communications.

The content server 115 also includes a communication interface 345 coupled to the bus 305. The communication interface 345 provides a two-way data communication coupling to the network 110. For example, the communication interface 345 can be a LAN card to provide a data communication connection to a compatible LAN. Wireless links can also be implemented. In any such implementation, communication interface 345 sends and receives electrical, electromagnetic or optical signals that carry digital data streams representing various types of information. The communication interface 345 can be a USB port.

In some embodiments, the content server 115 can be connected to the storage device 365 for storing or fetching information. Examples of the storage device 365 include, but are not limited to, a flash drive, a pen drive, a hard disk or any other storage media.

The processor 310 includes an encoding unit 350 that encodes key information of I-frames of the multimedia content.

The content server 115 may not include the processing units and the functions of the processing units can be performed by the processor 310.

In addition, the processor 310 may be coupled to a transmitting unit 355 through the bus 305 or through a communication mechanism for communication information. The transmitting unit 355 includes a selective scrambler 360 which scrambles the I-frames of the transmitting multimedia content. The selective scrambler 360 implements one of many scrambling techniques to scramble the I-frames of the transmitted multimedia content.

In another embodiment the content server 115 includes, but is not limited to a DVB-T content server, Digital Multimedia Broadcasting (DMB) content server, Media Forward Link Only (Media FLO) content server, Multimedia Broadcast Multicast Service (MBMS) content server, Integrated Services Digital Broadcasting- Terrestrial (ISDB-T) content server, Digital Video Broadcasting - Handheld (DVB-H) content server and Direct to Home (DTH) content server. The multimedia content may be telecasted through an Internet channel. The content server 115 scrambles the I-frames of the multimedia content and transmits the multimedia content to one or more electronic devices 105a to 105n.

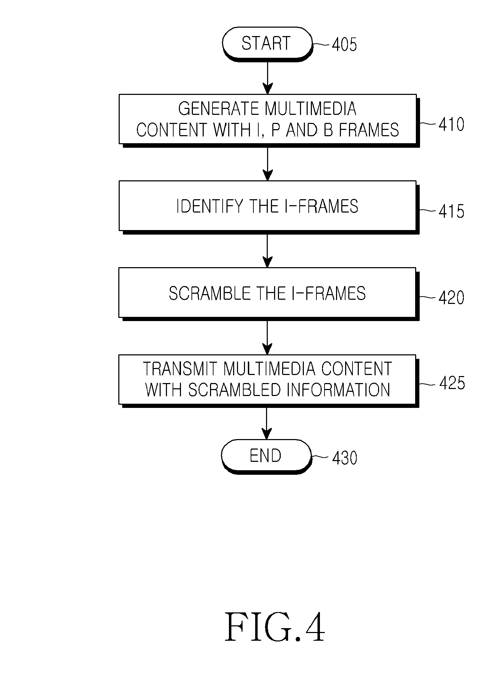

FIG. 4 illustrates a method for transmitting a scrambled multimedia content, in accordance with the present invention.

After the method starts at step 405, a content server generates multimedia content to be transmitted at step 410. The generated multimedia content is stored in a memory of the content server. Examples of multimedia content include, but are not limited to audio data, image data, and video data in any standard format.

At step 415, I-frames in the multimedia content are identified. Further the identifying can be for the one or more frames of the multimedia content, wherein the frames include, but are not limited to P-frames and B-frames.

At step 420, a scrambling technique is used to scramble the identified I-frames. A plurality of scrambling techniques may be used to scramble the I-frames of the multimedia content. The scrambling of I-frames may also include scrambling one or more P-frames and B-frames.

At step 425, the scrambled multimedia content and the key information of the scrambled I-frames are transmitted, and the method ends at step 430.

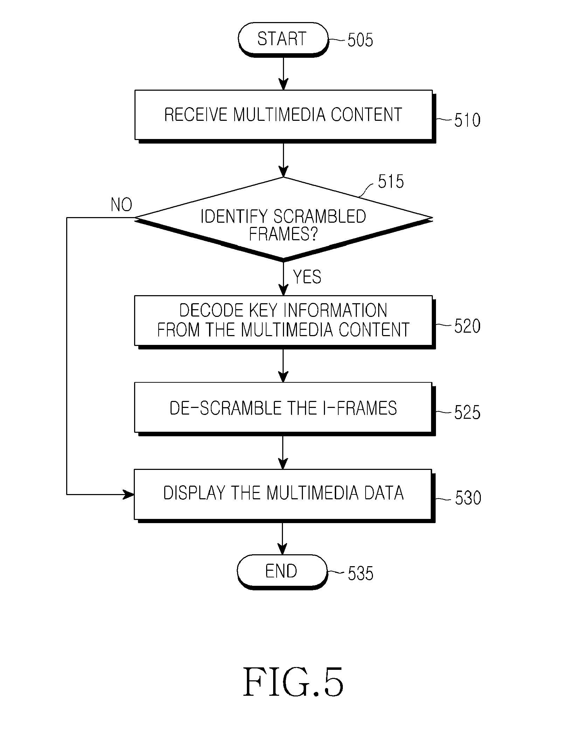

FIG. 5 illustrates a method for descrambling and displaying a scrambled multimedia content, in accordance with the present invention.

After the method starts at step 505, an electronic device receives multimedia content at step 510. The multimedia content is stored in a memory of the electronic device.

At step 515, a check for identifying scrambled frames in the received multimedia content is performed. If at step 515, the multimedia content includes [[]]scrambled frames, then step 520 is performed. If at step 515, the multimedia content does not include [[]] scrambled frames, then step 530 is performed.

At step 520, the key information required to descramble is decoded. The key information includes the information to descramble the frames.

At step 525, the scrambled frames are descrambled with the key information by a descrambling technique. A plurality of descrambling techniques can be used to descramble the frames of the multimedia content. The descrambling of the frames includes identifying the I-frames after descrambling the frames.

At step 530, the multimedia content is displayed on a television, mobile phone, or similar electronic devices. The multimedia content may be telecasted through an Internet channel. The method ends at step 535.

According to the present invention, the multimedia content having scrambled I-frames may not be viewed by a malicious user until the electronic device of the user descrambles the I-frames of the multimedia content. The electronic device of the user may descramble the I-frame only by decoding the key information.

According to the present invention, since the mobile TV user viewing the ghost images can view complete images by paying fees for descrambling the I-frames, the advertising business is promoted and the inconvenience to the mobile TV user of identifying undesired content immediately after a fee payment is eliminated.

The present invention and its advantages have been described with reference to specific embodiments. However, it will be apparent to a person ordinary skilled in the art that various modifications and changes can be made, without departing from the scope of the present disclosure, as set forth in the claims below. Accordingly, the specification and figures are to be regarded as illustrative examples rather than restrictive examples of the present invention. All such possible modifications are intended to be included within the scope of present invention.

## Claims

1. A method for transmitting multimedia content, the method comprising:
scrambling Intra coded frames selectively;
generating the multimedia content, wherein the multimedia content comprises scrambled information of the Intra coded -frames; and
transmitting the multimedia content.

2. The method of claim 1, wherein the scrambling comprises:
identifying the Intra coded frames from a combination of the Intra coded frames, predicted frames, and bi-directional predicted frames.

3. The method of claim 1, further comprising:
receiving the multimedia content.

4. The method of Claim 3, further comprising:
descrambling scrambled frames selectively.

5. A system for transmitting multimedia content, the system comprising:
a transmitting unit including
a selective scrambler for scrambling Intra coded frames selectively, and
a processor including
an encoding unit for encoding key information, and
a decoding unit for decoding key information.

6. The system of claim 5 further comprising:
a receiving unit(255) for receiving the multimedia content, the receiving unit(255) comprising:
a selective descrambler(260) for descrambling scrambled frames selectively.
